Europäisches Patentamt

European Patent Office

Office européen des brevets

(11) Veröffentlichungsnummer: **0 031 083**
**B1**

(12) **EUROPÄISCHE PATENTSCHRIFT**

(19)

(45) Veröffentlichungstag der Patentschrift:
10.07.85

(21) Anmeldenummer: 80107800.7

(22) Anmeldetag: 11.12.80

(51) Int. Cl.⁴: **H 02 M 1/08**

(54) **Spannungsteilerschaltung zum Anschluss parallel zu einem Thyristor.**

(30) Priorität: 20.12.79 SE 7910516

(43) Veröffentlichungstag der Anmeldung:
01.07.81 Patentblatt 81/26

(45) Bekanntmachung des Hinweises auf die Patenterteilung:
10.07.85 Patentblatt 85/28

(84) Benannte Vertragsstaaten:
CH DE FR GB LI

(56) Entgegenhaltungen:
DE - A - 2 417 575
FR - A - 2 170 124
FR - A - 2 309 071
US - A - 3 878 451

(73) Patentinhaber: ASEA AB, S-721 83 Västeras (SE)

(72) Erfinder: Asplund, Gunnar, Dipl.Ing., Bromsvägen 11,
S-771 00 Ludvika (SE)

(74) Vertreter: Boecker, Joachim, Dr.-Ing.,
Rathenauplatz 2-8, D-6000 Frankfurt a.M. 1 (DE)

## Beschreibung

Die Erfindung betrifft eine Spannungsteilerschaltung zum Anschluß parallel zu einem Thyristor gemäß dem Oberbegriff des Anspruches 1. Eine solche Spannungsteilerschaltung ist z. B. bekannt aus der FR-A-2 170 124.

Bei Thyristorventilen, die aus mehreren in Reihe geschalteten Thyristoren bestehen, wird oft jeder Thyristor mit einem Steuerglied versehen. Die Hauptaufgabe dieses Steuergliedes besteht in der Zündung des Thyristors. Das Steuerglied kann aber auch anderen Zwecken dienen, beispielsweise der Erzeugung eines Signals, welches anzeigt, ob das Steuerglied und/oder der Thyristor funktionsfähig ist oder nicht. Normalerweise erfolgt die Zündung in Abhängigkeit eines dem Steuerglied zugeführten Steuerimpulses. Häufig ist das Steuerglied jedoch auch derart ausgebildet, daß der Thyristor außerdem automatisch gezündet wird, sobald seine Sperrspannung einen bestimmten oberen Grenzwert erreicht.

Um diese Funktionen ausführen zu können, muß das Steuerglied mit Energie versorgt werden, die man in bekannter Weise am besten von einem parallel zum Thyristor angeschlossenen Spannungsteiler herleitet. Ferner ist es erforderlich, daß dem Steuerglied ein Signal zugeführt wird, welches der am Thyristor liegenden Spannung proportional ist. Auch dieses Signal gewinnt man am besten mit Hilfe eines Spannungsteilers. Da sich die Speisespannung und die Meßspannung nicht gegenseitig beeinflussen dürfen, wurden bisher überwiegend zwei getrennte Spannungsteiler verwendet (siehe z. B. FR-A-2 309 071), nämlich einer zur Energieversorgung des Steuergliedes und ein anderer zum Messen der am Thyristor liegenden Spannung. Da sowohl die Speisung wie die Messung auch bei der Frequenz Null (Gleichspannung) möglich sein muß, müssen beide Spannungsteiler rein ohmsche Stromkreise zwischen der Anode und der Kathode des Thyristors enthalten. Jeder Spannungsteiler muß dabei mindestens einen Hochspannungswiderstand enthalten, der den größten Teil der Thyristorspannung aufnimmt. Da der Wirkwiderstand der Spannungsteiler nicht allzu groß sein darf, ist der Leistungsverbrauch in dem genannten Hochspannungswiderstand relativ groß. In typischen Fällen liegt er in der Größenordnung von einigen hundert Watt. Die Widerstände, die also sowohl für eine hohe Spannung wie für eine hohe Leistung ausgelegt sein müssen, sind teuer, erfordern viel Platz und verbrauchen viel Leistung.

Normalerweise gehören zu den Spannungsteilern auch kapazitive Elemente (Kondensatoren), von denen mindestens eines in jedem Spannungsteiler für die hohe Thyristorspannung bemessen sein muß. Auch diese Elemente sind daher kostspielig und platzraubend.

Aus der FR-A-2 170 124 ist bereits eine Spannungsteilschaltung der eingangs genannten Art bekannt, bei der nur ein einziger Spannungsteiler zur Erzeugung der Meßspannung und der Speisespannung für die Steuerkreise verwendet wird. Der Spannungsteiler ist aus Wirkwiderständen und kapazitiven Widerständen zusammengesetzt. Diese bekannte Spannungsverteilerschaltung hat den Nachteil, daß einerseits reine Gleichspannungen am Thyristorventil wegen der kapazitiven Elemente im Spannungsteiler nicht erfaßt werden. Andererseits kann wegen der Ohmschem Widerstände des Spannungsteilers bei einem sehr schnellen Spannungsanstieg am Thyristor eine unter Umständen erforderliche Speiseenergie für die Steuerkreise nicht schnell genug aus der Spannung am Thyristor gewonnen werden. Ähnliche Schaltungen sind bekannt aus der US-A-3 878 451 und der DE-A-2 417 575.

Der Erfindung liegt die Aufgabe zugrunde, eine Spannungsteilerschaltung der eingangs genannten Art zu entwickeln, bei der mit geringem Aufwand sichergestellt ist, daß auch bei einem sehr schnellen Spannungsanstieg am Thyristor genügend Energie aus dieser Thyristorspannung für die Speisung der Steuerkreise gewonnen werden kann. Ferner liegt der Erfindung die Aufgabe zugrunde, sicherzustellen, daß bei einem sehr steilen Spannungsanstieg am Thyristor ein schützender Zündimpuls bereits beim Erreichen kleinerer Spannungswerte am Thyristor erzeugt wird als bei einem langsameren Spannungsanstieg.

Zur Lösung dieser Aufgabe wird eine Spannungsteilerschaltung nach dem Oberbegriff des Anspruches 1 vorgeschlagen, welcher erfindungsgemäß die im kennzeichnenden Teil des Anspruches 1 genannten Merkmale hat.

Vorteilhafte Weiterbildungen der Erfindung sind in den abhängigen Ansprüchen genannt.

Die Spannungsteilerschaltung gemäß der Erfindung hat gegenüber den bekannten Spannungsteilerschaltungen den Vorteil, daß eine Energieversorgung der Steuerkreise auch bei steil ansteigender Spannung am Thyristor sichergestellt ist, und daß bei einer steil ansteigenden Spannung der den Thyristor schützende Zündimpuls in bezug auf den erreichten Wert der Spannung am Thyristor früher geliefert wird. Zugleich zeichnet sich die Spannungsteilerschaltung nach der Erfindung durch geringen Platzbedarf, geringen Aufwand und geringen Leistungsverbrauch aus.

Anhand der in den Figuren gezeigten Ausführungsbeispiele soll die Erfindung näher erläutert werden. Es zeigt

Fig. 1 einen zu einem Thyristorventil gehörenden Thyristor einer Spannungsteilerschaltung gemäß der Erfindung,

Fig. 2 eine alternative Ausführung der Spannungsteilerschaltung gemäß Fig. 1, bei welcher der Hochfrequenzspannungsteiler geringeren Spannungsbeanspruchungen ausgesetzt ist.

Der Thyristor T ist einer von mehreren in Reihe liegenden Thyristoren, die zusammen ein Stromrichterventil bilden. Der Thyristor hat ein Steuerglied SD, das beim Empfang eines Steuerimpulses SP einen Zündstromimpuls an den Steuereingang des Thyristors gibt. Einem Verstärker oder Komparator F wird einerseits ein der Thyristorspannung $u_T$ entsprechendes Meßsignal $u_M$ und andererseits eine Bezugsspannung $u_r$ zugeführt. Wenn die Thyristorspannung den Wert von $u_r$ übersteigt, so gibt der Komparator F ein Signal an das Steuerglied SD zur Zündung des Thyristors, unabhängig vom Steuerimpuls SP. Das Meßsignal $u_M$ kann zugleich oder alternativ für andere Zwecke im Steuerglied, beispielsweise um die Zündung des Thyristors nur dann zuzulassen, wenn die Thyristorspannung einen vorgegebenen Mindestwert übersteigt, oder für Überwachungszwecke verwendet werden.

Der Thyristor T ist mit einer Spannungsteilerschaltung zur Schaffung einer gleichmäßigen Spannungsverteilung auf die Thyristoren des Ventils, zur Speisung (Energieversorgung) der zum Thyristor gehörenden Steuerglieder und der übrigen elektronischen Anordnung sowie zum Messen der Thyristorspannung versehen.

Die Spannungsverteilung auf die Thyristoren wird im Normalbetrieb in bekannter Weise von einem parallel zu jedem Thyristor liegenden RC-Glied vorgenommen, das aus dem Kondensator C5 und dem Widerstand R8 besteht.

Zur Speisung des Steuergliedes SD des Thyristors und der übrigen Elektronik F und zum Messen der Thyristorspannung ist gemäß der Erfindung eine Spannungsteilerschaltung vorgesehen, die aus einem Hochfrequenzteil und einem Niederfrequenzteil besteht.

Der Hochfrequenzteil besteht aus einem Kondensator C1 und zwei Widerständen R1 und R2; er teilt von den hochfrequenten Komponenten der Thyristorspannung $u_T$, deren Wert beispielsweise einige tausend Volt beträgt, eine Spannung von einigen hundert Volt (die Spannung im Punkt B) ab. Über die hier genannten Schaltungselemente erhält man bei schnellen (hochfrequenten) Vorgängen eine schnelle Aufladung des Kondensators C2, der als Energiespeicher für die Steuerkreise des Thyristors dient, die über eine Speiseschiene S vom Kondensator C2 gespeist werden. Die Speisespannung wird von einer Zenerdiode D1 auf ein gewünschtes Niveau (z. B. einige Dekaden Volt) begrenzt.

Die Spannung im Punkt B wird mit Hilfe der Kondensatoren C3 und C4 so aufgeteilt, daß am Komparator F eine zweckmäßige Spannung (einige Volt) auftritt. Dadurch, daß die Spannung im Punkte B bei höheren Frequenzen viel höher als die Speisespannung $u_S$ ist, ist die Spannung im Punkte B mit guter Genauigkeit der Thyristorspannung $u_T$ proportional und kann — über den Spannungsteiler C3, C4 — als ein Maß für die Thyristorspannung verwendet werden.

Der Niederfrequenzteil der Spannungsteilerschaltung besteht aus den Widerständen R3, R4 und R5. Diese sind so bemessen, daß der Punkt A auf einem Spannungsniveau liegt, das viel höher ist als die Spannung $u_M$ an dem Widerstand R5. Beispielsweise kann die Spannung im Punkte A einige hundert Volt betragen, während die Spannung $u_M$, wie oben ausgeführt, nur einige Volt beträgt.

Dadurch daß die Spannung im Punkte A viel höher als die Meßspannung $u_M$ ist, kann die Spannung im Punkte A — über den Widerstand R6 — als Niederfrequenzspeisespannung auf die Speiseschiene S gegeben werden, ohne die Proportionalität zwischen $u_T$ und $u_M$ nennenswert zu stören.

Die Spannung im Punkte A wird auch dazu benutzt, um mit Hilfe eines Widerstandes R7 und einer Zenerdiode D2 die Bezugsspannung $u_r$ für den Komparator F zu erzeugen.

Der Verbindungspunkt zwischen der Zenerdiode D2 und dem Widerstand R7 ist über einen Kondensator C6 mit dem Punkt B verbunden. Hierdurch kann man auch dann eine Bezugsspannung $u_r$ bekommen, wenn die Thyristorspannung $u_T$ negativ ist, ihr zeitlicher Differentialquotient jedoch positiv ist.

Die mit den Widerständen R2 und R6 in Reihe geschalteten Dioden D5 und D6 verhindern, daß sich der Kondensator C2 bei negativer Thyristorspannung entlädt. Die zwischen der Kathode des Thyristors und dem Punkt B angeschlossene Diode D4 ermöglicht eine Umladung des Kondensators C1. Die zwischen der Kathode des Thyristors und dem Punkt A angeschlossene Diode D3 gibt dem Punkt A ein definiertes Potential, nämlich das Kathodenpotential des Thyristors, wenn die Thyristorspannung negativ ist.

Der ohmsche Spannungsteiler R3-R4-R5 bewirkt neben seinen bereits genannten Funktionen eine gleichförmige Spannungsverteilung auf die Thyristoren des Ventils bei niedrigen Frequenzen und bei reiner Gleichspannung am Ventil.

Durch geeignete Wahl der Schaltungselemente kann man erreichen, daß das Meßsignal $u_M$ bei einer an den Thyristor angelegten Stufenspannung momentan einen höheren Wert annimmt und danach mit geeigneter Zeitkonstante auf den von dem ohmschen Spannungsteiler R3-R4-R5 bestimmten Wert absinkt. Hierdurch erreicht man, daß bei steilen Überspannungen der Thyristor über den Komparator F bereits bei einer niedrigeren Spannung gezündet wird. Hierdurch wird die Spannungsbeanspruchung des Thyristors herabgesetzt.

In der beschriebenen Spannungsteilerschaltung ist nur ein einziger Hochleistungswiderstand, nämlich R3, und nur ein einziger Hochspannungskondensator, nämlich C1, erforderlich. Hierdurch werden Preis, Platzbedarf und Leistungsverbrauch der Schaltung erheblich reduziert. Da ein typisches Thyristorventil für Hochspannung mehrere hundert in Reihe geschaltete Thyristoren enthalten kann, handelt es sich hierbei um einen bedeutenden Gewinn. Da die gesamte Verlustleistung in Form von Wärme an die Umgebung abgegeben werden muß, erzielt man außerdem eine wesentliche Ersparnis hinsichtlich des Kühlsystems des Ventils.

Unter dem Ausdruck »Hauptelektroden des Thyristors« werden die Anoden- und Kathodenanschlüsse des Thyristors verstanden.

Der Widerstand R2 in der Figur kann alternativ durch einen Kondensator oder durch eine Kombination aus Widerstand und Kondensatoren ersetzt werden.

Der Widerstand R1 (und auch R2) bewirkt eine Begrenzung des Stroms durch den Hochfrequenzteil bei hohen Frequenzen (schnellen Verläufen).

In der Figur und der Beschreibung sind alle Spannungen auf das Potential der Kathode des Thyristors bezogen.

Eventuell kann der Niederfrequenzteil so breitbandig ausgeführt werden, daß das Meßsignal des Niederfrequenzteils die Thyristorspannung auch bei höheren Frequenzen mit ausreichender Genauigkeit abbildet.

Wenn in diesem Fall ein Hochfrequenzteil zur Speisung der Steuerglieder vorgesehen ist, dann braucht dieser nicht auch zum Messen der Thyristorspannung vorgesehen zu werden. Eine genauere Messung bei hohen Frequenzen erhält man jedoch, wenn der Hochfrequenzteil auch zum Messen benutzt wird.

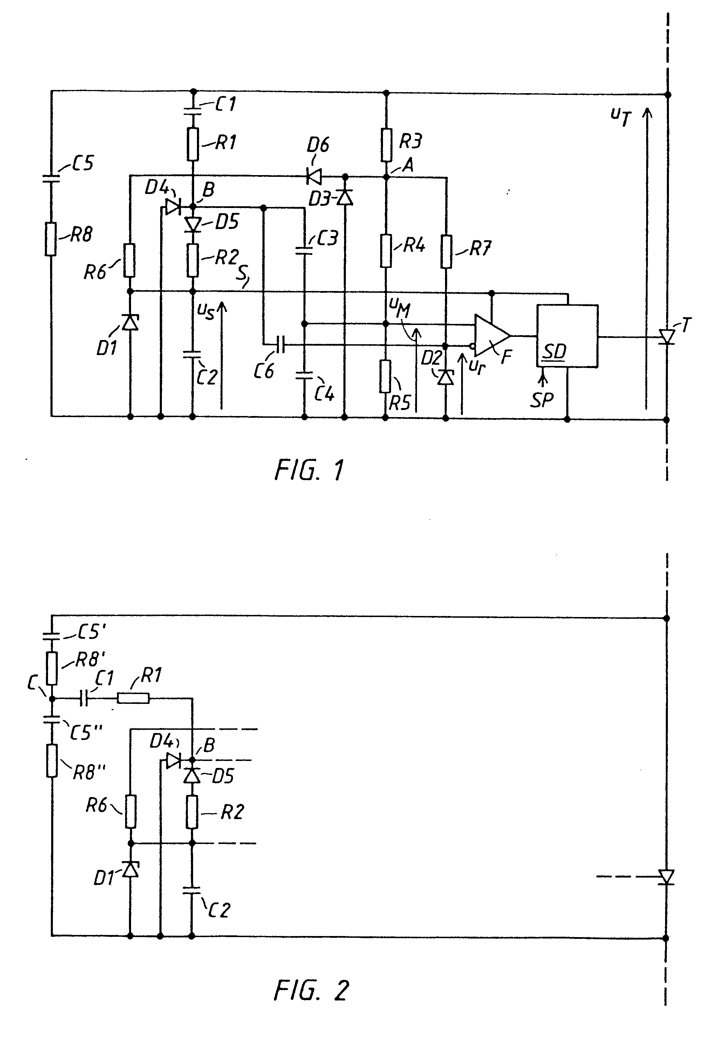

Der Spannungsteiler C5-R8 in Fig. 1 muß oft aus mehreren in Reihe geschalteten Elementen aufgebaut werden, um eine genügende Spannungsfestigkeit zu erhalten. In einem solchen Falle kann der Hochfrequenzteil an einen Anschlußpunkt am Spannungsteiler C5-R8 angeschlossen werden statt, wie in Fig. 1, an die Anode des Thyristors. Fig. 2 zeigt, wie der Spannungsteiler C5-R8 in Fig. 1 aus zwei Kondensatoren C5' und C5'' und zwei Widerständen R8' und R8'' aufgebaut ist. Der Hochfrequenzteil ist an den Punkt C zwischen R8' und C5'' angeschlossen und ist nur etwa der halben Thyristorspannung ausgesetzt, wodurch die Abmessungen der zugehörigen Schaltungselemente (vor allem C1 und R1), ihr Preis und ihre Verlustleistungen reduziert werden. Wenn die Elemente des Spannungsteilers C5-R8 auf mehr als zwei Einheiten jeder Art unterteilt sind, dann kann die Spannungsbeanspruchung des Hochfrequenzteils entsprechend stärker reduziert werden. Im übrigen stimmt die Schaltung nach Fig. 2 mit der nach Fig. 1 überein.

## Patentansprüche

1. Spannungsteilerschaltung zum Anschluß parallel zu den Hauptelektroden eines Thyristors (T) mit Spannungsteilerelementen zur Energieversorgung der Steuerkreise (F, SD) des Thyristors über eine Speiseschiene (S), an die ein aufladbarer Energiespeicher (C2) angeschlossen ist, und mit Spannungsteilerelementen zur Bildung einer der Thyristorspannung $(u_T)$ entsprechende Meßspannung $(u_M)$, dadurch gekennzeichnet, daß die Spannungsteilerschaltung aus einem Niederfrequenzteil und einem Hochfrequenzteil besteht, daß zum Niederfrequenzteil eine parallel zum Thyristor liegende Reihenschaltung aus Wirkwiderständen (R3, R4, R5) gehört, die einen Hochleistungswiderstand (R3) und mindestens zwei weitere Widerstände (R4, R5) enthält, daß der Hochleistungswiderstand (R3) den Hauptteil der Thyristorspannung aufnimmt und zwischen der ersten Hauptelektrode des Thyristors und einem Schaltungspunkt (A) angeordnet ist, daß der Schaltungspunkt (A) über eine erste Diode (D6) und ein erstes Impedanzelement (R6) an die Speiseschiene (S) angeschlossen ist, auf welcher die Speisespannung für die Steuerkreise bereitgestellt wird, daß zwischen den anderen Wirkwiderständen (R4, R5) des Niederfrequenzteils die Meßspannung $(u_M)$ als ein um ein Vielfaches kleinerer Teil der Spannung im ersten Schaltungspunkt (A) abgegriffen wird, daß der Hochfrequenzteil einen an die erste Hauptelektrode des Thyristors angeschlossenen Zweig umfaßt, der einen Hochspannungskondensator (C1) enthält, an dem der Hauptteil der Thyristorspannung abfällt, und daß der Endpunkt dieses Zweiges als zweiter Schaltungspunkt (B) über eine zweite Diode (D5) und ein zweites Impedanzelement (R2) ebenfalls an die Speiseschiene (S) angeschlossen ist.

2. Spannungsteilerschaltung nach Anspruch 1, dadurch gekennzeichnet, daß die Spannung im Schaltungspunkt (A) um ein Vielfaches größer als die Speisespannung $(u_S)$ für die Steuerkreise ist.

3. Spannungsteilerschaltung nach einem der vorhergehenden Ansprüche, dadurch gekennzeichnet, daß zwischen dem zweiten Schaltungspunkt (B) des Hochfrequenzteils und der zweiten Hauptelektrode des Thyristors ein kapazitiver Meßspannungsteiler (C3, C4) zur zusätzlichen Gewinnung einer Meßspannung bei hohen Frequenzen angeschlossen ist.

4. Spannungsteilerschaltung nach Anspruch 3, dadurch gekennzeichnet, daß der gesamte Hochfrequenzteil (C1, R1, R2, C3, C4) so bemessen ist, daß die Spannung am zweiten Meßspannungsteiler (C3, C4) um ein Vielfaches größer als die Speisespannung $(u_S)$ für die Steuerkreise des Thyristors und die Meßspannung $(u_M)$ ist.

5. Spannungsteilerschaltung nach einem der Ansprüche 3 oder 4, bei der ein weiterer Spannungsteiler (C5', C5'', R8', R8'') zu dem Thyristor parallelgeschaltet ist, dadurch gekennzeichnet, daß der Hochfrequenzteil (C1, R1, R2, C3, C4) an eine Anzapfung (C) des weiteren Spannungsteilers angeschlossen ist (Fig. 2).

6. Spannungsteilerschaltung nach einem der Ansprüche 3 bis 5, dadurch gekennzeichnet, daß sie derart bemessen ist, daß die Meßspannung $(u_M)$ bei einer an den Thyristor angelegten Stufenspannung momentan einen Wert annimmt, der größer ist, als der nur von dem Niederfrequenzteil bestimmte Wert.

7. Spannungsteilerschaltung nach einem der vorhergehenden Ansprüche, dadurch gekennzeichnet, daß sie ein an den ersten Schaltungspunkt (A) angeschlossenes Glied (R7, D2) zur Erzeugung einer Bezugsspannung $(u_r)$ für die Steuerkreise enthält.

8. Spannungsteilerschaltung nach Anspruch 7, dadurch gekennzeichnet, daß das Glied zur Erzeugung der Bezugsspannung (u$_r$) über ein Impedanzelement (C6) auch an den zweiten Schaltungspunkt (B) angeschlossen ist.

**Claims**

1. Voltage divider circuit for parallel connection across the main electrodes of a thyristor (T) including voltage dividing elements for providing power for the control circuits (F, SD) of the thyristor via a supply line (S), to which a chargable energy storage (C2) is connected, and including voltage dividing elements to form a measuring voltage (u$_M$) corresponding the voltage (u$_T$) across the thyristor, characterized in that the voltage divider circuit consists of a low frequency section and a high frequency section, that the low frequency section includes a series connection of effective resistors (R3, R4, R5) connected across to the thyristor and including one high power resistor (R3) and at least two additional resistors (R4, R5), that the high power resistor (R3) assumes the main portion of the thyristor voltage and is connected between the first main electrode of the thyristor and a junction point (A), that said junction point (A) is connected to the supply line (S) via a first diode (D6) and a first impedance element (R6) the supply line providing the supply voltage for the control circuits, that the measuring voltage (u$_M$) is tapped between the remaining effective resistors (R4, R5) of the low frequency section this measuring voltage being a multiple of times smaller than the voltage in said first junction point (A), that the high frequency section encludes a branche connected to the first main electrode of the thyristor an comprising a high voltage condensor (C1) which assumes the main portion of the thyristor voltage, and that the end of this branche forms a second junction point (B) being also connected to the supply line (S) via a second diode (D5) and a second impedance element (R2).

2. Voltage divider circuit according to claim 1, characterized in that the voltage in the junction point (A) is a multiple of times greater than the supply voltage (u$_S$) for the control circuits.

3. Voltage divider circuit according to any of the preceding claims, characterized in that a capacitive measuring voltage divider (C3, C4) is connected between said second junction point (B) of the high frequency section and the second main electrode of the thyristor for additionally providing a measuring voltage at high frequencies.

4. Voltage divider circuit according to claim 3, characterized in that the entire high frequency section (C1, R1, R2, C3, C4) is dimensioned such, that the voltage across the second measuring voltage divider (C3, C4) is a multiple of times greater than the supply voltage (u$_S$) for the control circuits for the thyristor and the measuring voltage (u$_M$).

5. Voltage divider circuit according to claims 3 or 4, with a further voltage divider (C5', C5'', R8', R8'') connected in parallel to the thyristor, characterized in that the high frequency section (C1, R1, R2, C3, C4) is connected to a tapping point (C) of said further voltage divider (fig. 2).

6. Voltage divider circuit according to claim 3 or 4, characterized in being dimensioned such that the measuring voltage (u$_M$), in response to a step voltage applied across the thyristor, instantaneously assumes a higher value, than the one determined by the low frequency section only.

7. Voltage divider circuit according to any of the preceding claims, characterized in comprising an element (R7, D2) connected to said first junction point (A) for generating a reference voltage (u$_r$) for the control circuits.

8. Voltage divider circuit according to claim 7, characterized in that said element generating the reference voltage (u$_r$) is also connected to said second junction point (B) via an impedance element (C6).

**Revendications**

1. Circuit-diviseur de tension pour branchement parallèle sur les électrodes principales d'un thyristor (T), avec des éléments du diviseur de tension pour l'alimentation en énergie du circuit de commande (F, SD) du thyristor par l'intermédiaire d'une barre d'alimentation (S) à laquelle est relié un accumulateur d'énergie rechargeable (C2), et avec des éléments du diviseur de tension pour former une tension de mesure (u$_M$) qui correspond à la tension (u$_T$) du thyristor, caractérisé par le fait que le circuit-diviseur de tension est constitué par une partie basse fréquence et par une partie haute fréquence, qu'à la partie basse fréquence appartient un circuit série situé en parallèle sur le thyristor et constitué par des résistances actives (R3, R4, R5), ledit circuit série comportant une résistance haute puissance (R3) et au moins deux autres résistances (R4, R5), que la résistance haute puissance (R3) reçoit la partie principale de la tension du thyristor et est disposée entre la première électrode principale du thyristor et un point de circuit (A), que le point de circuit (A) est relié, par l'intermédiaire d'une première diode (C6) et par l'intermédiaire d'une première impédance (R6), à la barre d'alimentation (S) sur laquelle est rendue disponible la tension d'alimentation pour les circuits de commande, qu'entre lesdites autres résistances actives (R4, R5) de la partie basse fréquence, on prélève la tension de mesure (u$_M$) en tant que partie constituant un sousmultiple de la tension au premier point du circuit (A), que la partie haute fréquence comporte une branche qui est reliée à la première électrode principale du thyristor et qui comporte un condensateur haute tension (C1) aux bornes duquel la partie principale de la tension du thyristor chute, et que le point terminal de cette branche est relié, par l'intermédiaire d'une seconde diode (C5) et d'une seconde impédance (R2), également à la barre d'alimentation (S), en tant que second point de circuit (B).

2. Circuit-diviseur de tension selon la revendication 1, caractérisé par le fait que la tension au point de circuit (A) est un multiple supérieur de la tension d'alimentation ($u_S$) pour les circuits de commande.

3. Circuit-diviseur de tension selon l'une des revendications précédentes, caractérisé par le fait qu'entre le second point de circuit (B) de la partie haute fréquence et la seconde électrode principale du thyristor est branché un diviseur capacitif de la tension de mesure (C3, C4) en vue de l'obtention supplémentaire d'une tension de mesure, dans le cas de fréquences élevées.

4. Circuit- diviseur de tension selon la revendication 3, caractérisé par le fait que la totalité de la partie haute fréquence (C1, R1, R2, C3, C4) est dimensionnée de telle façon que la tension au niveau du second diviseur de tension de mesure (C3, C4) est un multiple de la tension d'alimentation ($u_S$) pour les circuits de commande du thyristor et de la tension de mesure ($u_M$).

5. Circuit-diviseur de tension selon l'une des revendications 3 ou 4, dans lequel un diviseur de tension supplémentaire (C5', C5'', R8', R8'') est monté en parallèle sur le thyristor, caractérisé par le fait que la partie haute fréquence (C1, R1, R2, C3, C4) est reliée à une prise (C) du diviseur de tension supplémentaire (fig. 2).

6. Circuit-diviseur de tension selon l'une des revendications 3 à 5, caractérisé par le fait qu'il est dimensionné de telle façon que la tension de mesure ($u_M$) assume, dans le cas d'une tension en paliers appliquée au thyristor, une valeur momentanée qui est supérieure à la valeur déterminée par seulement la partie basse fréquence.

7. Circuit-diviseur de tension selon l'une des revendications précédentes, caractérisé par le fait qu'il comporte, relié au premier point de circuit (A), un élément (R7, D2) pour produire une tension de référence ($u_r$) pour les circuits de commande.

8. Circuit-diviseur de tension selon la revendication 7, caractérisé par le fait que l'élément pour produire la tension de référence ($u_r$) est relié, par l'intermédiaire d'une impédance (C6), également au second point de circuit (B).

FIG. 1

FIG. 2